# EUROPEAN PATENT APPLICATION

(11) **EP 4 546 595 A1**
(43) Date of publication of application: **30.04.2025**
(21) Application number: 24208100.8
(22) Date of filing: 22.10.2024
(51) Int. Cl.: H02J 3/00, H02J 7/00, H02J 7/04, H01M 10/42, H01M 10/46, H01M 10/48, H01M 50/256

(54) **PORTABLE POWER SUPPLY WITH ADJUSTABLE MAXIMUM CHARGE RATE**

(30) Priority: 23.10.2023 US 202363592334 P
(71) Applicant: Milwaukee Electric Tool Corporation, Brookfield, WI 53005 (US)
(72) Inventor: BROZEK, Jeffrey M, Mequon, WI (US); FEIST, Ethan, H, West Milwaukee, WI (US)
(74) Representative: Forresters IP LLP

(57) **Abstract**

Portable power supply with a maximum charge rate feature. The portable power supply includes a power source; a power input unit configured to receive power from an external source; a core charger coupled to the power source and the power input unit; and an electronic processor coupled to the core charger. The electronic processor is configured to receive a power limit value and determine a supportable charge current of the internal power source. The core charger is configured to determine a power-limited current based on the power limit value and an output voltage of the core charger, determine a target output current by comparing the power-limited current and the supportable charge current, and charge the power source with the received power at the target output current.

## Description

### BACKGROUND

The present disclosure relates to a portable power supply, and, in particular, a portable power supply with an adjustable maximum charge rate.

### SUMMARY

Battery-powered portable power supplies ("portable power supplies") are used in place of gas-powered generators to power or charge electrical loads such as power tools, computers, cell phones, or the like. Generally, portable power supplies include various kinds of outlets (e.g., an alternating current (AC) outlet, a universal serial bus (USB), a 12 Volt outlet, or the like) and electrical connection interfaces configured to receive power from an external power source (e.g., an AC or DC power source used to charge a core battery or an internal power source). However, if more than one portable power supply is plugged into the same circuit, the combined charging power could trip a circuit breaker. Accordingly, there is a need for portable power supplies with an adjustable maximum charge rate.

One embodiment provides a portable power supply including a power source, a power input unit configured to receive power from an external source, a core charger coupled to the power source and the power input unit, and a controller coupled to the core charger and the power source. The controller is configured to receive a power limit value, determine a supportable charge current of the power source, and determine a power-limited current based on the power limit value and a voltage of the power source. The controller is also configured to determine a target charge current by comparing the power-limited current and the supportable charge current, and charge, using the core charger, the power source at the target charge current.

In some aspects, the portable power supply also includes a sensor coupled to the power source and configured to collect sensor data associated with the power source. The controller is configured to determine the supportable charge current of the power source based on the sensor data.

In some aspects, the sensor data includes one or more selected from a group consisting of a temperature and the voltage of the power source.

In some aspects, the target charge current is determined as the lower value between the power-limited current and the supportable charge current.

In some aspects, the controller is configured to continuously update the target charge current to maintain the power limit.

In some aspects, the portable power supply is a first portable power supply and the power limit value is received from a second portable power supply configured to act as a master device. The first portable power supply is a slave device of the second portable power supply.

In some aspects, the portable power supply includes a network communications module and the controller is configured to receive the power limit value, via the network communications module, from an external device.

In some aspects, the controller is further configured to receive a first command from the external device via the network communications module, and enable/disable an adjustable charge rate feature of the portable power supply based on the first command. The controller is also configured to charge the power source at the target charge current when the adjustable charge rate feature is enabled, and charge the power source at the supportable charge current when the adjustable charge rate feature is disabled.

In some aspects, the portable power supply also includes a user interface communicably coupled to the controller. The controller is further configured to provide, via the user interface, an indication of an enabled/disabled status of the adjustable charge rate feature.

Another embodiment provides a method of operating a portable power supply including an internal power source, a power input unit, a core charger, and a controller. The method includes receiving, using the controller, a power limit value, determining, using the controller, a supportable charge current of the internal power source, and determining, using the controller, a power-limited current based on the power limit value and a core charger output voltage. The method also includes determining, using the controller, a target charge current by comparing the power-limited current and the supportable charge current, and charging, using the core charger, the internal power source at the target charge current.

In some aspects, the method also includes determining, using a sensor, sensor data associated with the internal power source. The supportable charge current is determined based on the sensor data.

In some aspects, the target charge current is determined as the lower value between the power-limited current and the supportable charge current.

In some aspects, the power limit value is received from an external device via a network communications module.

In some aspects, the method also includes receiving, using the controller, a command from an external device via a network communications module, and enabling/disabling, using the controller, an adjustable charge rate feature of the portable power supply based on the command. The method further includes charging, using the core charger, the internal power source at the target charge current when the adjustable charge rate feature is enabled, and charging, using the core charger, the internal power source at the supportable charge current when the adjustable charge rate feature is disabled.

In some aspects, the method also includes providing, via a user interface, an indication of an enabled/disabled status of the adjustable charge rate feature.

Another embodiment provides a first portable power supply including a power source, a power input unit configured to receive power from an external source, a core charger coupled to the power source and the power input unit, a network communications module configured to enable communications with a second portable power supply, and a controller. The controller is configured to determine a first supportable charge power of the first portable power supply, determine a second supportable charge power of the second portable power supply, and determine a first target charge power and a second target charge power based on a comparison of the first supportable charge power and the second supportable charge power with a power limit of the external source. The controller is also configured to charge, using the core charger, the power source at the first target charge power, and provide, via the network communications module, an indication of the second target charge power to the second portable power supply.

In some aspects, the first target charge power is equal to the first supportable charge power and the second target charge power is equal to the second supportable charge power when a sum of the first supportable charge power and the second supportable charge power are below the power limit of the external source.

In some aspects, at least one selected from the group consisting of: the first target charge power is less than the first supportable charge power and the second target charge power is less than the second supportable charge power when a sum of the first supportable charge power and the second supportable charge power exceeds the power limit of the external source.

In some aspects, the first portable power supply includes a sensor coupled to the power source and configured to collect sensor data associated with the power source. The controller is configured to determine the first supportable charge power of the power source based on the sensor data.

In some aspects, the sensor data includes one or more selected from a group consisting of: a temperature and a voltage of the power source.

Other aspects of the embodiments will become apparent by consideration of the detailed description and accompanying drawings.

### BRIEF DESCRIPTION OF THE DRAWINGS

FIG. 1 illustrates a perspective view of a portable power supply.
FIG. 2 is a simplified block diagram showing an example power flow for the portable power supply of FIG. 1.
FIG. 3 illustrates a control system for the portable power supply of FIG. 1.
FIG. 4 illustrates a communication system for the portable power supply of FIG. 1 and an external device.
FIG. 5 illustrates a flowchart of a method for the portable power supply of FIG. 1 to adjust the maximum charge rate.
FIG. 6 illustrates an interface of an external device for controlling the power supply of FIG. 1.
FIG. 7 illustrates a core charger of the control system of FIG. 3.
FIG. 8 illustrates a display for the portable power supply of FIG. 1.
FIG. 9 illustrates a flowchart of a method for the communication system of FIG. 4to adjust the maximum charge rate.

### DETAILED DESCRIPTION

Before any embodiments of the disclosure are explained in detail, it is to be understood that the subject matter is not limited in its application to the details of construction and the arrangement of components set forth in the following description or illustrated in the following drawings. The subject matter is capable of other embodiments and of being practiced or of being carried out in various ways. Also, it is to be understood that the phraseology and terminology used herein is for the purpose of description and should not be regarded as limiting.

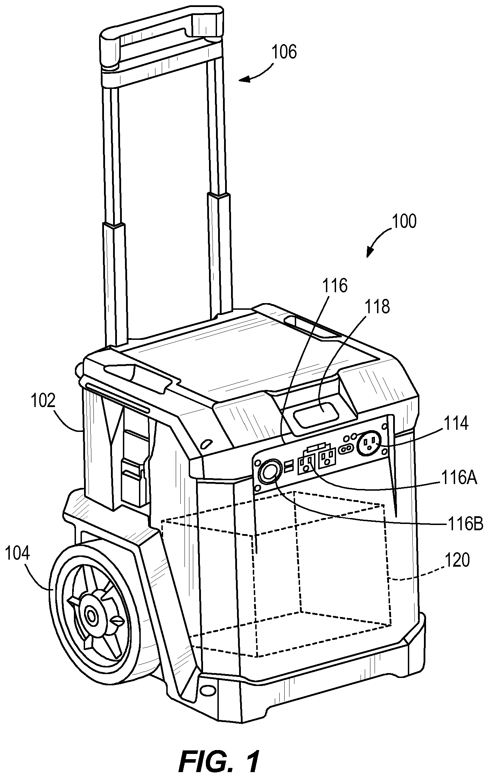

FIG. 1 illustrates a portable power supply device or power supply 100. The power supply 100 is suitable for providing power at a remote location such as a worksite. Where a permanent power supply such as mains power (e.g., electrical grid outlet) is not available (or not within reach), and power is required in order to operate electrically powered tools, the power supply 100 may provide power to be used by those tools. The power supply 100 may provide alternating current (AC) power to tools such as corded drills, saws, and the like and battery-charging units and/or direct current (DC) power for DC-powered tools.

The power supply 100 includes, among other things, a housing 102. The housing 102 may be made of a durable material, such as metal, plastic, or the like, that is capable of withstanding scratches, dents, or other similar wear common to a worksite. In some embodiments, the housing 102 includes one or more wheels 104 and a handle assembly 106. In the illustrated embodiment, the handle assembly 106 is a telescoping handle movable between an extended position and a collapsed position. The wheels 104 of the power supply 100 facilitate movement of the power supply 100.

The housing 102 of power supply 100 further includes a power input unit 114, a power output unit 116, and a display 118. The power input unit 114 may include multiple electrical connection interfaces configured to receive power from an external power source. In some embodiments, the external power source is a DC power source. For example, the DC power source may be one or more photovoltaic cells (e.g., a solar panel), an electric vehicle (EV) charging station, or any other DC power source. In some embodiments, the external power source is an AC power source. For example, the AC power source may be a conventional wall outlet, such as a 120 V outlet or a 240 V outlet, found in North America. As another example, the AC power source may be a conventional wall outlet, such as a 220V outlet or 230V outlet, found outside of North America. In some embodiments, the power input unit 114 is replaced by or additionally includes a cable (e.g., a power cord) configured to plug into a conventional wall outlet. In some embodiments, the power input unit 114 further includes one or more devices, such as antennas or induction coils, configured to wirelessly receive power from an external power source.

The power output unit 116 includes one or more power outlets. In the illustrated embodiment, the power output unit 116 includes a plurality of AC power outlets 116A and a plurality of DC power outlets 116B. It should be understood that the number of power outlets included in the power output unit 116 is not limited to the power outlets illustrated in FIG. 1. For example, in some embodiments of the power supply 100, the power output unit 116 may include more or fewer power outlets than the power outlets included in the illustrated embodiment of power supply 100.

The power output unit 116 is configured to provide power output to one or more peripheral devices. The one or more peripheral devices may be a smartphone, a tablet computer, a laptop computer, a portable music player, a power tool, a power tool battery pack, a power tool battery pack charger, or the like. The peripheral devices may be configured to receive DC and/or AC power from the power output unit 116. The AC power outlets 116A include, for example, North American standard AC outlets configured to provide a sine wave or modified sine wave AC output to the peripheral devices. The DC power outlets 116B may include one or more receptacles (e.g., power tool battery pack interfaces) for receiving and charging power tool battery packs. The one or more DC outlets 116B can also include, for example, a universal serial bus (USB) outlet (e.g., USB-C, USB-A, mini-USB, or the like), a 12 Volts outlet, or the like.

The display 118 is configured to indicate a state of the power supply 100 to a user, such as state of charge of an internal power source 120 and/or fault conditions. In some embodiments, the display 118 includes one or more light-emitting diode (LED) indicators configured to illuminate and display a current state of charge of internal power source 120. In some embodiments, the display 118 is, for example, a liquid crystal display (LCD), a light-emitting diode (LED) display, an organic LED (OLED) display, an electroluminescent display (ELD), a surface-conduction electron-emitter display (SED), a field emission display (FED), a thin-film transistor (TFT) LCD, and electronic-ink (e-ink) display, etc. In other embodiments, the power supply 100 does not include a display. In some examples, the display 118 is a touch screen display.

The power supply 100 also includes the internal power source 120 disposed within the housing 102. In some embodiments, the internal power source 120 is a battery core including a plurality of battery cells connected in a series-parallel configuration. The battery core may be divided into multiple battery modules connected together. In one example, the battery core includes the plurality of battery cells connected in a 28S10P configuration including 10 strings of battery cells connected in parallel with each string of battery cells including 28 series connected battery cells. The battery core may be divided into two modules connected in series with each battery module having a 14S10P configuration. The plurality of battery cells may include lithium chemistry based battery cells. For example, the plurality of battery cells are 18650, 21700, or the like lithium ion battery cells. Each of the battery cells may operate at a nominal voltage of 3.6 Volts and have a maximum voltage of 4.2 Volts. The internal power source 120 may therefore have a nominal voltage of 100.8 Volts (28 X 3.6 Volts) and a maximum voltage of 117.6 Volts (28 X 4.2 Volts). In other embodiments, the internal power source 120 may include one or more battery packs.

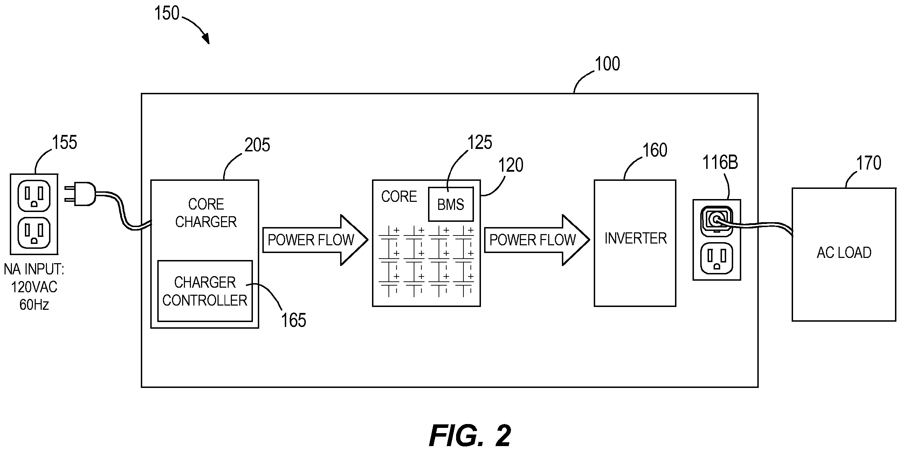

FIG. 2 is a simplified block diagram showing an example power flow 150 for the power supply 100. The power supply 100 is connected to an AC wall outlet 155 (e.g., external power source) using a power cord via the power input unit 114 (see FIG. 1). The AC power received from the AC wall outlet 155 is provided to a core charger 205 for charging the internal power source 120. In some examples, an AC-to-DC converter may be included in the core charger 205 to convert the AC power to DC power to charge the internal power source 120. The DC power from the internal power source 120 is provided to an inverter 160. The inverter 160 converts the DC power from the internal power source 120 to be provided to the outlets 116B. The outlets 116B are used to power electrical loads 170, for example, power tools. In the example illustrated, the internal power source 120 is capable of simultaneous charging and discharging.

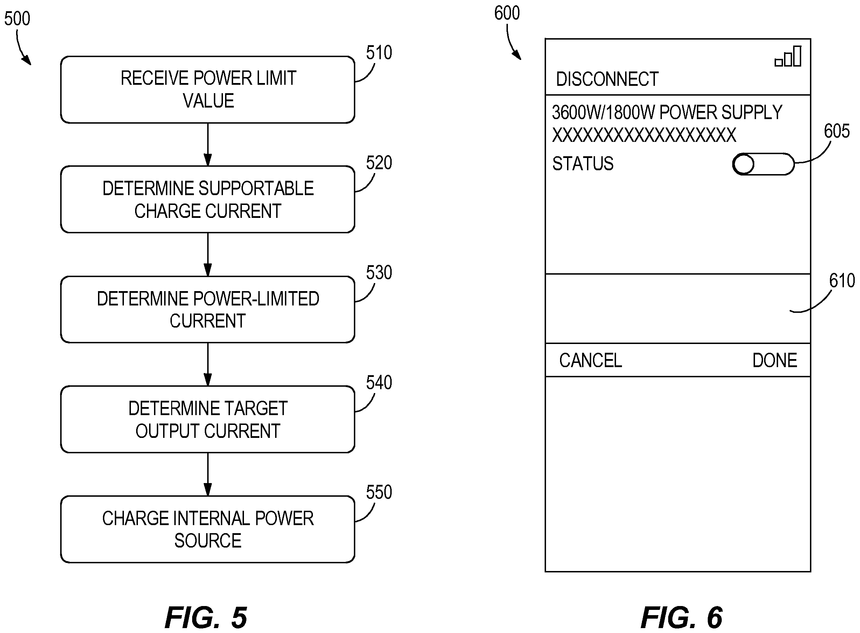

The core charger 205 provides charging power to charge the internal power source 120. The core charger 205 may employ different charging schemes to charge the internal power source 120. For example, the core charger 205 may employ a combination of constant voltage (CV) and constant current (CC) schemes to charge the internal power source 120 using the input power received through the power input unit 114. In some cases, the core charger employs a "constant power" (CP) scheme which includes a combination of timed CV and CC schemes. The core charger 205 may include an AC-to-DC converter to convert the AC power to DC power to charge the internal power source 120. An example embodiment of the core charger 205 is described below with reference to FIG. 5.

Each of the internal power source 120 and the core charger 205 may include separate controllers. In the example illustrated, the internal power source 120 includes a battery management system (BMS) 125 and the core charger 205 includes a charger controller 165. The BMS 125 manages the control and safety features of the internal power source 120 as well as the CC/CV/CP charging scheme (e.g., CV or CC or CP, charging output, and the like) from the core charger 205 to the internal power source 120. The charger controller 165 responds to the BMS request for current and/or charging scheme.

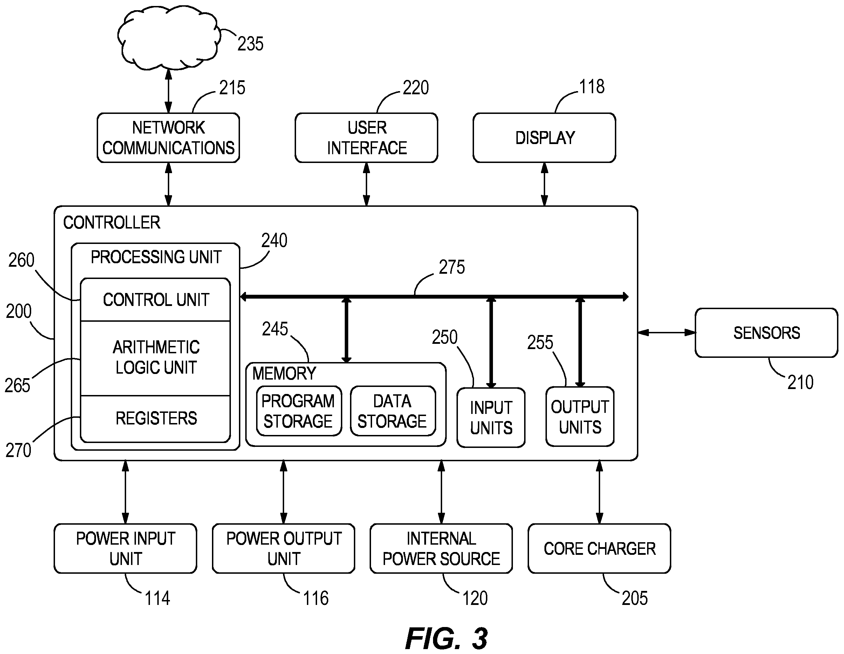

FIG. 3 is a generalized schematic illustration of a controller 200 of the power supply 100. For example, the controller 200 includes the BMS 125 and the charger controller 165. FIG. 3 provides a simplified illustration of the control components (e.g., the BMS 125 and the charger controller 165) of the power supply 100, which may be divided between the various components (e.g., the internal power source 120, the core charger 306) of the power supply 100, as a single controller 200. The controller 200 is electrically and/or communicatively connected to a variety of modules or components of the power supply 100. For example, the controller 200 may be connected to the power input unit 114, the power output unit 116, the display 118, the internal power source 120, a core charger 205, a plurality of sensors 210, a network communications module 215, and a user interface 220. Persons skilled in the art will recognize that electrical and/or communicative connection between the controller 200 and the internal power source 120 includes electrical and/or communicative connection between the controller 200 and components included in the internal power source 120.

The network communications module 215 is connected to a network 235 to enable the controller 200 to communicate with peripheral devices in the network, such as a smartphone, a server, or other power supplies 100. The network communications module 215 is, for example, a transceiver configured to enable transmission and reception of signals between the power supply 100 and other external devices (e.g., a second power supply 100).

The sensors 210 include, for example, one or more voltage sensors, one or more current sensors, one or more temperature sensors, and/or one or more additional sensors used for measuring electrical and/or other characteristics of the power supply 100. Each of the sensors 210 generates one or more output signals that are provided to the controller 200 for processing and evaluation. The user interface 220 is included to provide user control of the power supply 100. The user interface 220 can include any combination of digital and analog input devices required to achieve a desired level of control for the power supply 100. For example, the user interface 220 may include a plurality of knobs, a plurality of dials, a plurality of switches, a plurality of buttons, or the like. In some embodiments, the user interface 220 is integrated with the display 118 (e.g., as a touchscreen display).

The controller 200 includes combinations of hardware and software that are operable to, among other things, control the operation of the power supply 100, communicate over the network 235, receive input from a user via the user interface 220, provide information to a user via the display 118, control the charge provided to the power source 180, and the like. In some embodiments, the controller 200 is implemented partially or entirely on a semiconductor (e.g., a field-programmable gate array (FPGA) semiconductor) chip or an Application Specific Integrated Circuit (ASIC), such as a chip developed through a register transfer level (RTL) design process.

As depicted in FIG. 3, the controller 200 includes, among other things, a processing unit 240 (e.g., a microprocessor, a microcontroller, an electronic processor, an electronic controller, or another suitable programmable device), a memory 245, input units 250, and output units 255. The processing unit 240 includes, among other things, a control unit 260, an arithmetic logic unit ("ALU") 265, and a plurality of registers 270 (shown as a group of registers in FIG. 3). The processing unit 240 is implemented using a known computer architecture (e.g., a modified Harvard architecture, a von Neumann architecture, and the like). The processing unit 240, the memory 245, the input units 250, and the output units 255, as well as the various modules or circuits connected to the controller 200 are connected by one or more control and/or data buses (e.g., common bus 275). The components of the controller 200 may be duplicated and divided between the various controllers, for example, the BMS 125 and the charger controller 165.

The control and/or data buses are shown generally in FIG. 3 for illustrative purposes. Although the controller 200 is illustrated in FIG. 3 as one controller, the controller 200 could also include multiple controllers configured to work together to achieve a desired level of control for the power supply 100. As such, any control functions and processes described herein with respect to the controller 200 could also be performed by two or more controllers functioning in a distributed manner.

The memory 245 is a non-transitory computer readable medium and includes, for example, a program storage area and a data storage area. The program storage area and the data storage area can include combinations of different types of memory, such as a read only memory ("ROM"), a random access memory ("RAM") (e.g., dynamic RAM ["DRAM"], synchronous DRAM ["SDRAM"], and the like), electrically erasable programmable ROM ("EEPROM"), flash memory, a hard disk, an SD card, or other suitable magnetic, optical, physical, or electronic memory devices.

The processing unit 240 is connected to the memory 245 and is configured to retrieve from the memory 245 instructions related to the control processes and methods described herein. The processing unit 240 is configured to execute the retrieved instructions. The instructions are storable in a RAM of the memory 245 (e.g., during execution), a ROM of the memory 245 (e.g., on a generally permanent basis), or another non-transitory computer readable medium such as another memory or a disc. Software included in the implementation of the power supply 100 and controller 200 can be stored in the memory 245 of the controller 200. The software includes, for example, firmware, one or more applications, program data, filters, rules, one or more program modules, and other executable instructions. The controller 200 is configured to retrieve from the memory 245 and execute, among other things, instructions related to the control processes and methods described herein. In other embodiments, the controller 200 includes additional, fewer, or different components.

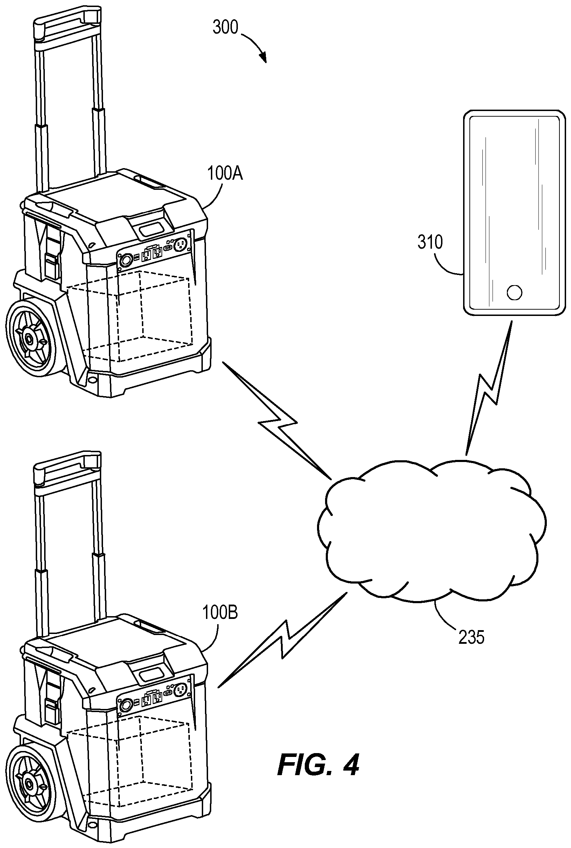

FIG. 4 illustrates a communication system 300. The communication system 300 includes at least one power supply 100 and an external device 310 communicating over the network 235. Two power supplies 100 (for example, a first portable power supply 100A and a second portable power supply 100B) are depicted in FIG. 4 for illustrative purposes; however, the communication system 300 may include any number of power supplies 100. Each power supply 100 and the external device 310 can communicate wirelessly while they are within a communication range of each other. Each power supply 100 may communicate, for example, power supply status, power supply operation statistics, power supply identification, power supply sensor data, stored power supply usage information, power supply maintenance data, a power limit, power supply charging information, and the like. In some examples, the power supplies 100a and 100b may communicate directly via the AC circuit to which they are plugged (e.g., power-line communication). In such examples, the power supplies 100a and 100b may be configured to detect each other and automatically perform charge functionality.

The external device 310 is, for example, a smart phone (as illustrated), a laptop computer, a tablet computer, a personal digital assistant (PDA), or another electronic device capable of communicating wirelessly with the power supply 100 and providing a user interface. The external device 310 runs an application (e.g., a smartphone application) to perform various functions related to the power supplies 100. The external device 310 provides a user interface and allows a user to access and interact with the power supply 100. The external device 310 can receive user inputs to determine operational parameters, enable or disable features, and the like. The user interface of the external device 310 provides an easy-to-use interface for the user to control and customize operation of the power supply 100. The external device 310, therefore, grants the user access to the power supply operational data of the power supply 100, and provides a user interface such that the user can interact with the controller 200 of the power supply 100.

The network 235 may include various networking elements (routers, hubs, switches, cellular towers, wired connections, wireless connections, etc.) for connecting to, for example, the Internet, a cellular data network, a local network, or a combination thereof as previously described. In some embodiments, the network 235 is a cellular network, such as, for example, a Global System for Mobile Communications ("GSM") network, a General Packet Radio Service ("GPRS") network, a Code Division Multiple Access ("CDMA") network, an Evolution-Data Optimized ("EV-DO") network, an Enhanced Data Rates for GSM Evolution ("EDGE") network, a 3GSM network, a 4GSM network, a 4G LTE network, 5G New Radio, a Digital Enhanced Cordless Telecommunications ("DECT") network, a Digital AMPS ("IS-136/TDMA") network, or an Integrated Digital Enhanced Network ("iDEN") network, and/or the like. In some embodiments, the network 235 is a local area network, for example, a Bluetooth^{®} network, a WiFi^{™} network, and/or the like.

Returning to FIG. 3, the network communications module 215 enables the power supply 100 to communicate with the external device 310 or other power supplies 100 (see, e.g., FIG. 4) over the communication network 235. In some examples, the network communications module 215 is a Bluetooth^{®} controller. The Bluetooth^{®} controller communicates with the external device 310 or another power supply 100 employing the Bluetooth ^{®} protocol. Therefore, in the embodiment illustrated in FIG. 4, the external device 310 and the power supply 100 or the two power supplies 100 are within a communication range (i.e., in proximity) of each other while they exchange data. In other examples, the network communications module 215 communicates using other protocols (e.g., Wi-Fi^{™}, ZigBee^{™}, a proprietary protocol, and the like) over different types of wireless networks. For example, the network communications module 215 may be configured to communicate via Wi-Fi through a wide area network such as the Internet or a local area network, or to communicate through a piconet (e.g., using infrared or NFC communications).

The network communications module 215 is configured to receive data from the controller 200 and relay the information to the external device 310 or another power supply 100. In a similar manner, the network communications module 215 is configured to receive information (e.g., configuration and programming information) from the external device 310 or another power supply 100 and relay the information to the controller 200.

In some embodiments, the core charger 205 of the power supply 100 is a 1000 Watt (approximately 1000 Watts) rated charger to charge the 28S10P internal power source 120. The core charger 205 may therefore draw a maximum current of about 8.5 Amperes (1000 Watts / 120 Volts) from a wall outlet. Most standard wall outlets are part of a circuit breaker that trips when the devices connected downstream of the circuit breaker draw a current from the circuit breaker that is greater than 15 Amperes. That is, most standard circuit breakers are rated for 15 Amperes. When the circuit breaker trips, the power output to all of the devices downstream of the circuit breaker is cut off until the circuit breaker is manually reset. Accordingly, when two or more power supplies 100 or one power supply 100 and another high wattage device (e.g., high-wattage power tools) are connected to the same circuit breaker, the current draw (e.g., 8.5 Amperes + 8.5 Amperes = 17 Amperes) from the connected devices may cause the 15 Amperes circuit breaker to trip (17 Amperes > 15 Amperes) resulting in power being cut-off to all devices connected to (i.e., downstream of) the circuit breaker. The power supply 100 solves this problem by allowing a user to adjust a maximum charge rate of the core charger 205. The maximum charger rate can be adjusted based on instructions received from the external device 310 (or another power supply 100 configured to function as a master device) so that two or more power supplies 100 can charge, at a lower charging rate, on the same 15 Ampere AC circuit without tripping the circuit breaker. In some cases, due to efficiency, input may be greater than 1000W (e.g., 1110W with a roughly 90% efficiency). In such cases, the input current may be higher than the 8.5A example referenced above.

FIG. 5 depicts a flowchart of an example method 500 for operating the power supply 100 using an adjustable charge rate. The example method 500 generally shows in more detail how the portable power supply 100 is configured to adjust a maximum charge rate based on input parameters. The example method 500 can be implemented by the components of the portable power supply 100 described above with respect to FIGS. 1-4. However, it will be understood that the method 500 may be performed, for example, by any other suitable system, environment, software, and hardware, or a combination of systems, environments, software, and hardware as appropriate. In some embodiments, various operations of the method 500 can be run in parallel, in combination, in loops, or in any order. In some embodiments, various operations are optional. For example, in some cases, the portable power supply 100 is configured to continually adjust the maximum charge rate based on updated parameter values reflecting the current charge state in the or internal power source 120.

At block 510, the method 500 includes receiving, using the controller 200, a power limit value. In some examples, the power limit is received as a wattage value (e.g., 500 Watts). In other examples, the power limit is received as a current value (e.g., 5 Amperes). In other examples, the power limit value is received from the external device 310 via the network communications module 215. FIG. 6 illustrates an embodiment of an interface 600 (e.g., a graphical user interface) of the external device 310 for setting the adjustable charge rate feature and the power limit. The interface 600 includes an adjustable charge rate status selector 605 to enable/disable the adjustable charge rate feature. When the status selector 605 is selected by the user, an enable/disable command (e.g., a first command) corresponding to the user selection is received by the power supply 100 from the external device 310 over the network communications module 215. The controller 200 enables/disables the adjustable charge rate feature of the power supply 100 in response to receiving the enable/disable command. When the adjustable charge rate feature is enabled, a prompt 610 to provide a value for the power limit is enabled or displayed. In some examples, the prompt 610 may include a slider to select a value for the maximum charge rate between 0 and the maximum rated charge rate (e.g., between 0 - 8.5 Amperes or between 0 - 1000 Watts). In other examples, the prompt 610 is a text box allowing the user to specify the maximum charge rate.

In some examples, the power limit value is received from another portable power supply 100 that is configured to act as a master device. In some examples, the master device receives data from a plurality of "slave" charging power supplies and determines the power limits for each of these slave charging power supplies. In yet other examples, the power limit value is received via a user interface 220 of the power supply 100. The power limit value may be updated on the fly using any of the external device 310, a master power supply 100, the user interface 220 of the power supply 100, or the like. In such examples, the controller 200 uses the updated power limit value to adjust the charge rate of the core charger 205. From block 510, the method 500 proceeds to block 520.

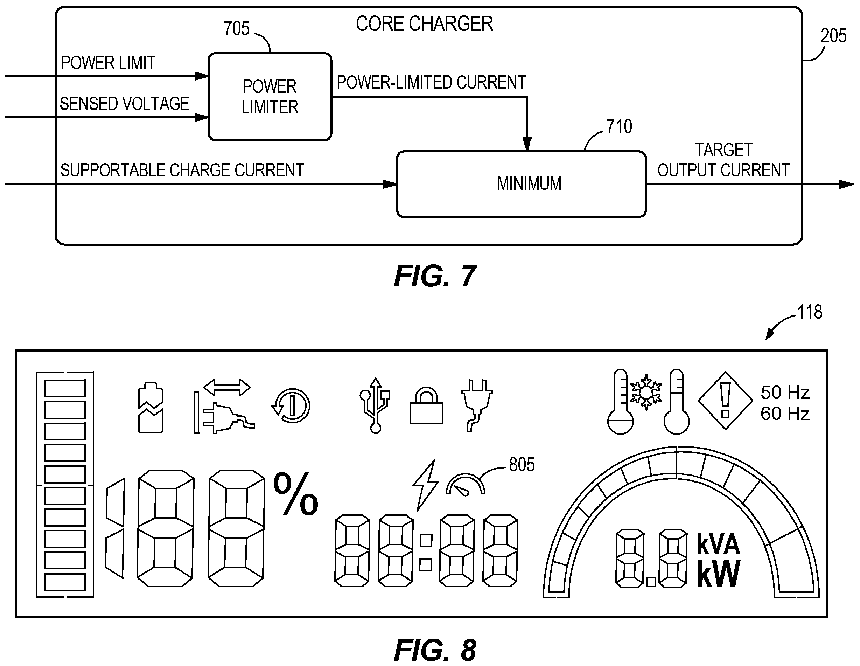

At block 520, the method 500 includes determining, using the controller 200, a supportable charge current of the internal power source 120. The supportable charge current is the maximum charging current that can be safely provided to charge the internal power source 120. The supportable charge current may be determined based on various parameters, for example, a voltage or state of charge of the internal power source 120, a temperature of the internal power source 120, a temperature of the core charger 205, and/or the like. A maximum supportable charge current is determined based on the maximum charging current specified by the manufacturer of the plurality of battery cells of the internal power source 120 and the series-parallel configuration of the plurality of battery cells in the internal power source 120. The supportable charge current can be adjusted down from the maximum supportable charge current based on the parameters as discussed above. The supportable charge current of the internal power source may be determined, using the controller 200, using sensor data collected by the plurality of sensors 210. For example, the sensor data may include a temperature of the internal power source 120 or a voltage of the internal power source 120 (e.g., an open circuit voltage or a closed circuit voltage). From block 520, the method 500 proceeds to block 530. In some embodiments, the supportable charge current is determined or calculated by the BMS 125. The BMS 125 receives sensor data and determines the supportable charge current. The BMS 125 then requests charging power (i.e., current draw) at the supportable charge current from the core charger 205. The charger controller 165 receives the request for the supportable charge current from the BMS 125 (e.g., see FIG. 7).

At block 530, the method 500 includes determining, using the core charger 205, a power-limited current based on the power limit value and a core charger output voltage. In some examples, the charger output voltage is nearly identical to the voltage of the internal power source 120 when charging. In some examples, the charger output voltage is a little higher to the battery core voltage when charging due to any voltage drops in the wiring and metal-oxide-semiconductor field-effect transistor (MOSFET) between the charger and the battery core. The voltage of the internal power source 120 is, for example, an open circuit voltage, a closed circuit voltage, a state of charge, or the like of the internal power source 120. In some embodiments, the core charger 205 determines the power-limited current value by dividing the power limit value by the core charger output voltage. For example, when the power limit value is set at 500 Watts (e.g., half the maximum charge rating of the core charger 205) and the core charger output voltage is 100 Volts, then the power limited current is 5 Amperes (500 Watts / 100 volts). From block 530, the method 500 proceeds to block 540. The core charger 205 may include an internal voltage detector that measures the core charger output voltage during charging to determine the power-limited current.

At block 540, the method 500 includes determining, using the core charger 205, a target charge current by comparing the power-limited current and the supportable charge current. In some embodiments, the core charger 205 determines the target charge current as the lower value (e.g., MIN value) between the power-limited current and the supportable charge current. FIG. 7 illustrates an example embodiment of the core charger 205 for determining the target charge current. As depicted, the core charger 205 includes a power limiter module 705 and a minimum module 710. The power limiter module 705 and the minimum module 710 may be implemented using the charger controller 165. Generally, the core charger 205 enables the power supply 100, via the controller 200, to adjust a charge rate at a given point in time based on certain input parameters. This adjustable charge rate may prevent the power supply 100 from tripping breakers when, for example, multiple power supplies 100 are charging on the same circuit.

More specifically, as the voltage of the internal power source 120 changes (e.g., as the power supply 100 charges) the core charger 205 adjusts the target charge power/current (the charge rate) accordingly to maintain the wattage set by the power limit based on the values of the sensed voltage and the supportable charge current. The power limit may be a wattage value that is set by, for example, the external device 310. The sensed voltage is a measure of the voltage of the internal power source 120 (e.g., the open circuit voltage of the internal power source 120). In some examples, the sensed voltage is a measured charger output voltage, as measured by the microcontroller. The supportable charge current is the charge current that the internal power source 120 can support based on a variety of conditions of the internal power source 120, such as temperature, voltage, and the like, provided by the sensors 210.

As depicted, the power limiter module 705 processes the power limit and the output voltage sense to determine a power-limited current. The minimum module 710 compares the power-limited current to the supportable output current to determine a target charge power/current for the core charger 205. As an example, when the power limit is set to 500 Watts (e.g., by the external device 310), the supportable charge current is 8 Amperes, and the core charger output voltage is 100 Volts, the power limiter module 705 determines that power-limited current is 5 Amperes (500 watts / 100 volts). The minimum module 710 compares the power-limited current (5 Amperes) to the supportable output current (8 Amperes) and provides the lower of the two values as the target charge power/current of 500 Watts (100V @ 5A). When the supportable charge current drops below the power-limited current (e.g., to 3 Amperes), the minimum module 710 updates the target charge power/current accordingly (e.g., 300 Watts (100V @ 3A) based on the lower of the two values. When the supportable output current remains at 8 Amperes and the output voltage sense increases to 110 Volts, the minimum module 710 updates the target charge power/current accordingly to 4.54 Amperes (500 Watts / 110 Volts) to maintain the requested wattage. From block 540, the method 500 proceeds to block 550.

At block 550, the method 500 includes charging, using the core charger 205, the internal power source 120 at the target charge current. The core charger 205 outputs the target charge current/power to the internal power source 120 to charge the internal power source 120. The method 500 may repeat until, for example, a command is received (e.g., from the external device 310 or the display 118) to disable the adjustable charge rate feature or until charging is complete. The core charger 205 may charge the internal power source 120 using the target charge current when the adjustable charge rate feature is enabled and charge the internal power source 120 using the supportable charge current when the adjustable charge rate feature is disabled.

As discussed above, the adjustable charge rate feature may be selectable feature such that the user may enable and disable the adjustable charge rate feature. FIG. 8 illustrates an embodiment of the display 118. The display 118 provides indications relating to the portable power supply 100 to an operator, for example, a state of charge of the internal power source 120, a run time, a temperature, an instantaneous or average power output, a charge status, a discharge status, an AC output frequency, fault conditions, and/or the like. The icon 805 indicates the status of the adjustable charge rate feature (i.e., the enabled/disabled status). For example, the icon 805 may be provided when the adjustable charge rate feature is enabled and not provided when the adjustable charge rate feature is disabled.

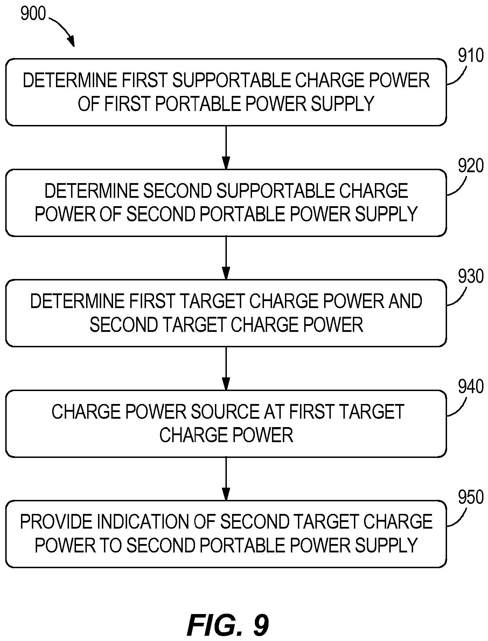

FIG. 9 depicts a flowchart of an example method 900 for operating the communication system 300 using an adjustable charge rate. The example method 900 generally shows in more detail how the first portable power supply 100A is configured to adjust a charge rate for the first portable power supply 100A and the second portable power supply 100B. The example method 900 can be implemented by the components of the portable power supply 100 (e.g., the first portable power supply 100A) described above with respect to FIGS. 1-8. However, it will be understood that the method 900 may be performed, for example, by any other suitable system, environment, software, and hardware, or a combination of systems, environments, software, and hardware as appropriate. In some embodiments, various operations of the method 900 can be run in parallel, in combination, in loops, or in any order. In some embodiments, various operations are optional. For example, in some cases, the portable power supply 100 is configured to continually adjust the charge rate based on updated parameter values reflecting the current charge state in the or internal power source 120. Additionally, although the method 900 is described with respect to two portable power supplies 100, the method 900 is equally applicable, with minor modifications, to more than two portable power supplies 100.

At block 910, the method 900 includes determining, using the controller 200 of the first portable power supply 100A, first supportable charge power of the first portable power supply 100A. The first supportable charge power is the maximum charging power that can be safely provided to charge the internal power source 120 of the first portable power supply 100A. The supportable charge power may be determined based on various parameters, for example, a voltage or state of charge of the internal power source 120, a temperature of the internal power source 120, a temperature of the core charger 205, and/or the like. A maximum supportable charge current is determined based on the maximum charging current specified by the manufacturer of the plurality of battery cells of the internal power source 120 and the series-parallel configuration of the plurality of battery cells in the internal power source 120. The supportable charge current can be adjusted down from the maximum supportable charge current based on the parameters as discussed above. The supportable charge current of the internal power source may be determined, using the controller 200, using sensor data collected by the plurality of sensors 210. For example, the sensor data may include a temperature of the internal power source 120 or a voltage of the internal power source 120 (e.g., an open circuit voltage or a closed circuit voltage). In some embodiments, the first supportable charge current is determined or calculated by the BMS 125. The BMS 125 receives sensor data and determines the first supportable charge current. The BMS 125 then requests charging power (i.e., current draw) at the supportable charge current from the core charger 205. The charger controller 165 receives the request for the supportable charge current from the BMS 125 (e.g., see FIG. 7). From block 910, the method 900 proceeds to block 920.

At block 920, the method 900 includes determining, using the controller 200, second supportable charge power of the second portable power supply 100B. The second supportable charge power is determined by the second portable power supply 100B similarly as discussed above with respect to the first supportable charge power. The second portable power supply 100B provides an indication of the second supportable charge power to the first portable power supply 100A via the respective network communications module 215 of the first portable power supply 100A and the second portable power supply 100B. In some examples, the external device 310 may transmit the indications between the first portable power supply 100A and the second portable power supply 100B. From block 920, the method 900 proceeds to block 930.

At block 930, the method 900 includes determining, using the controller 200, a first target charge power and a second target charge power based on a comparison of the first supportable charge power and the second supportable charge power with a power limit of the external source. The first target charge power corresponds to charging the internal power source 120 of the first portable power supply 100A and the second target charge power corresponds to charging the internal power source 120 of the second portable power supply 100B. The first and second supportable charge power may be determined as a power (in Watts) or current (in Amperes). For example, the charge rate of each of the first and second portable power supplies 100 is 1000 Watts. When both portable power supplies can support the maximum charge rate of 1000 Watts, then the total supportable charge power is 2000 Watts (1000 Watts + 1000 Watts). However, the external power source (i.e., a circuit breaker) can only support 1800 Watts of total power (i.e., 120 Volts X 15 Amperes = 1800 Watts). Similarly, the maximum charging current of each of the first and second portable power supplies 100 is 8.5 Amperes. When both portable power supplies can support the maximum charge current of 8.5 Amperes, then the total supportable charge current is 17 Amperes (8.5 Amperes + 8.5 Amperes). However, the external power source (i.e., a circuit breaker) can only support 15 Amperes of total current draw. The controller 200 therefore adjusts the targe charge power of each of the portable power supplies 100 such that the total charge power is below the power limit (e.g., 1800 Watts or 15 Amperes). In some examples, the controller 200 may equally (e.g., by percentage) reduce the charge power for the first portable power supply 100A and the second portable power supply 100B. In some examples, the reduction in charge power may be determined based on a priority assigned to the first portable power supply 100A and the second portable power supply 100B. For example, full power may be provided to the higher priority portable power supply 100 and lower than supportable charge power may be provided to the lower priority portable power supply 100. The priority may be set using the external device 310. Various other methods may be used to determine the first and second target charge power such that the total target charge power is below the power limit of the external power source. From block 930, the method 900 proceeds to block 940.

At block 940, the method 900 includes charging, using the core charger 205, the internal power source 120 at the first target charge power. The core charger 205 outputs the first target charge current/power to the internal power source 120 to charge the internal power source 120. At block 950, the method 900 includes providing, via the network communications module 215, an indication of the second target charge power to the second portable power supply 100B. The controller 200 provides the indication of the second target charge power to the second portable power supply 100B. The core charger 205 of the second portable power supply 100B outputs the second target charge current/power to the internal power source 120 of the second portable power supply 100B to charge the internal power source 120 of the second portable power supply 100B.

The method 900 may repeat until, for example, a command is received (e.g., from the external device 310 or the display 118) to disable the adjustable charge rate feature or until charging is complete. The core charger 205 may charge the internal power source 120 using the target charge current/power when the adjustable charge rate feature is enabled and charge the internal power source 120 using the supportable charge current/power when the adjustable charge rate feature is disabled.

In the foregoing specification, specific embodiments have been described. However, various modifications and changes can be made without departing from the scope of the invention as set forth in the claims below. Accordingly, the specification and figures are to be regarded in an illustrative rather than a restrictive sense, and all such modifications are intended to be included within the scope of present teachings.

Moreover, in this document, relational terms such as "comprises," "comprising," "has," "having," "includes," "including," "contains," "containing" or any other variation thereof, are intended to cover a non-exclusive inclusion, such that a process, method, article, or apparatus that comprises, has, includes, contains a list of elements does not include only those elements but may include other elements not expressly listed or inherent to such process, method, article, or apparatus. An element preceded by "comprises ... a," "has ... a," "includes ... a," or "contains ... a" does not, without more constraints, preclude the existence of additional identical elements in the process, method, article, or apparatus that comprises, has, includes, contains the element.

The terms "a" and "an" are defined as one or more unless explicitly stated otherwise herein. The terms "substantially," "essentially," "approximately," "about" or any other version thereof, are defined as being close to as understood by one of ordinary skill in the art, and in one non-limiting embodiment the term is defined to be within 10%, in another embodiment within 5%, in another embodiment within 1% and in another embodiment within 0.5%. The term "coupled" as used herein is defined as connected, although not necessarily directly and not necessarily mechanically. A device or structure that is "configured" in a certain way is configured in at least that way but may also be configured in ways that are not listed.

Relative terminology, such as, for example, "about," "approximately," "substantially," etc., used in connection with a quantity or condition would be understood by those of ordinary skill to be inclusive of the stated value and has the meaning dictated by the context (e.g., the term includes at least the degree of error associated with the measurement accuracy, tolerances [e.g., manufacturing, assembly, use, etc.] associated with the particular value, etc.). Such terminology should also be considered as disclosing the range defined by the absolute values of the two endpoints. For example, the expression "from about 2 to about 4" also discloses the range "from 2 to 4". The relative terminology may refer to plus or minus a percentage (e.g., 1%, 5%, 10%, or more) of an indicated value.

In addition, it should be understood that embodiments may include hardware, software, and electronic components or modules that, for purposes of discussion, may be illustrated and described as if the majority of the components were implemented solely in hardware. However, one of ordinary skill in the art, and based on a reading of this detailed description, would recognize that, in at least one embodiment, the electronic-based aspects may be implemented in software (e.g., stored on non-transitory computer-readable medium) executable by one or more processing units, such as a microprocessor and/or application specific integrated circuits ("ASICs"). As such, it should be noted that a plurality of hardware and software-based devices, as well as a plurality of different structural components, may be utilized to implement the embodiments. For example, "servers," "computing devices," "controllers," "processors," etc., described in the specification can include one or more processing units, one or more computer-readable medium modules, one or more input/output interfaces, and various connections (e.g., a system bus) connecting the components.

It should be understood that although certain drawings illustrate hardware and software located within particular devices, these depictions are for illustrative purposes only. Functionality described herein as being performed by one component may be performed by multiple components in a distributed manner. Likewise, functionality performed by multiple components may be consolidated and performed by a single component. In some embodiments, the illustrated components may be combined or divided into separate software, firmware and/or hardware. For example, instead of being located within and performed by a single electronic processor, logic and processing may be distributed among multiple electronic processors. Regardless of how they are combined or divided, hardware and software components may be located on the same computing device or may be distributed among different computing devices connected by one or more networks or other suitable communication links. Similarly, a component described as performing particular functionality may also perform additional functionality not described herein. For example, a device or structure that is "configured" in a certain way is configured in at least that way but may also be configured in ways that are not explicitly listed.

Thus, embodiments described herein provide, among other things, a portable power supply providing adjustable maximum charge rate. Various features and advantages are set forth in the following claims.

Systems, methods, and devices in accordance with the present disclosure may take any one or more of the following configurations.
Example 1. A portable power supply comprising a power source; a power input unit configured to receive power from an external source; a core charger coupled to the power source and the power input unit; and a controller coupled to the core charger and the power source and configured to receive a power limit value, determine a supportable charge current of the power source, determine a power-limited current based on the power limit value and a voltage of the power source, determine a target charge current by comparing the power-limited current and the supportable charge current, and charge, using the core charger, the power source at the target charge current.
Example 2. The portable power supply of Example 1, further comprising a sensor coupled to the power source and configured to collect sensor data associated with the power source, wherein the controller is configured to determine the supportable charge current of the power source based on the sensor data.
Example 3. The portable power supply of Example 2, wherein the sensor data includes one or more selected from a group consisting of a temperature and the voltage of the power source.
Example 4. The portable power supply of any of Examples 1-3, wherein the target charge current is determined as the lower value between the power-limited current and the supportable charge current.
Example 5. The portable power supply of any of Examples 1-4, wherein the controller is configured to continuously update the target charge current to maintain the power limit.
Example 6. The portable power supply of any of Examples 1-5, wherein the portable power supply is a first portable power supply and the power limit value is received from a second portable power supply configured to act as a master device, wherein the first portable power supply is a slave device of the second portable power supply.
Example 7. The portable power supply of any of Examples 1-6, further comprising a network communications module, wherein the controller is configured to receive the power limit value, via the network communications module, from an external device.
Example 8. The portable power supply of Example 7, wherein the controller is further configured to receive a first command from the external device via the network communications module; enable/disable an adjustable charge rate feature of the portable power supply based on the first command; charge the power source at the target charge current when the adjustable charge rate feature is enabled; and charge the power source at the supportable charge current when the adjustable charge rate feature is disabled.
Example 9. The portable power supply of Example 8, further comprising a user interface communicably coupled to the controller, wherein the controller is further configured to provide, via the user interface, an indication of an enabled/disabled status of the adjustable charge rate feature.
Example 10. A method of operating a portable power supply including an internal power source, a power input unit, a core charger, and a controller, the method comprising: receiving, using the controller, a power limit value; determining, using the controller, a supportable charge current of the internal power source; determining, using the controller, a power-limited current based on the power limit value and a core charger output voltage; determining, using the controller, a target charge current by comparing the power-limited current and the supportable charge current; and charging, using the core charger, the internal power source at the target charge current.
Example 11. The method of Example 10, further comprising determining, using a sensor, sensor data associated with the internal power source, wherein the supportable charge current is determined based on the sensor data.
Example 12. The method of any of Examples 10 or 11, wherein the target charge current is determined as the lower value between the power-limited current and the supportable charge current.
Example 13. The method of any of Examples 10-12, wherein the power limit value is received from an external device via a network communications module.
Example 14. The method of any of Examples 10-13, further comprising, receiving, using the controller, a command from an external device via a network communications module; enabling/disabling, using the controller, an adjustable charge rate feature of the portable power supply based on the command; charging, using the core charger, the internal power source at the target charge current when the adjustable charge rate feature is enabled; and charging, using the core charger, the internal power source at the supportable charge current when the adjustable charge rate feature is disabled.
Example 15. The method of Example 14, further comprising, providing, via a user interface, an indication of an enabled/disabled status of the adjustable charge rate feature.
Example 16. A first portable power supply comprising a power source; a power input unit configured to receive power from an external source; a core charger coupled to the power source and the power input unit; a network communications module configured to enable communications with a second portable power supply; a controller configured to determine a first supportable charge power of the first portable power supply, determine a second supportable charge power of the second portable power supply, determine a first target charge power and a second target charge power based on a comparison of the first supportable charge power and the second supportable charge power with a power limit of the external source, charge, using the core charger, the power source at the first target charge power, and provide, via the network communications module, an indication of the second target charge power to the second portable power supply.
Example 17. The first portable power supply of Example 16, wherein the first target charge power is equal to the first supportable charge power and the second target charge power is equal to the second supportable charge power when a sum of the first supportable charge power and the second supportable charge power are below the power limit of the external source.
Example 18. The first portable power supply of Examples 16 or 17, wherein at least one selected from the group consisting of: the first target charge power is less than the first supportable charge power and the second target charge power is less than the second supportable charge power when a sum of the first supportable charge power and the second supportable charge power exceeds the power limit of the external source.
Example 19. The first portable power supply of any of Examples 16-18, further comprising: a sensor coupled to the power source and configured to collect sensor data associated with the power source, wherein the controller is configured to determine the first supportable charge power of the power source based on the sensor data.
Example 20. The first portable power supply of Example 19, wherein the sensor data includes one or more selected from a group consisting of: a temperature and a voltage of the power source.

## Claims

1. A portable power supply comprising:
a power source;
a power input unit configured to receive power from an external source;
a core charger coupled to the power source and the power input unit; and
a controller coupled to the core charger and the power source and configured to
receive a power limit value,
determine a supportable charge current of the power source,
determine a power-limited current based on the power limit value and a voltage of the power source,
determine a target charge current by comparing the power-limited current and the supportable charge current, and
charge, using the core charger, the power source at the target charge current.

2. The portable power supply of claim 1, further comprising:
a sensor coupled to the power source and configured to collect sensor data associated with the power source, wherein the controller is configured to determine the supportable charge current of the power source based on the sensor data.

3. The portable power supply of any of claims 1 or 2, wherein the sensor data includes one or more selected from a group consisting of a temperature and the voltage of the power source.

4. The portable power supply of any of claims 1-3, wherein the target charge current is determined as the lower value between the power-limited current and the supportable charge current.

5. The portable power supply of any of claims 1-4, wherein the controller is configured to continuously update the target charge current to maintain the power limit.

6. The portable power supply of any of claims 1-5, wherein the portable power supply is a first portable power supply and the power limit value is received from a second portable power supply configured to act as a master device, wherein the first portable power supply is a slave device of the second portable power supply.

7. The portable power supply of any of claims 1-6, further comprising:
a network communications module,
wherein the controller is configured to receive the power limit value, via the network communications module, from an external device.

8. The portable power supply of claim 7, wherein the controller is further configured to receive a first command from the external device via the network communications module; enable/disable an adjustable charge rate feature of the portable power supply based on the first command;
charge the power source at the target charge current when the adjustable charge rate feature is enabled; and
charge the power source at the supportable charge current when the adjustable charge rate feature is disabled.

9. The portable power supply of claim 8, further comprising:
a user interface communicably coupled to the controller,
wherein the controller is further configured to
provide, via the user interface, an indication of an enabled/disabled status of the adjustable charge rate feature.

10. A method of operating a portable power supply including an internal power source, a power input unit, a core charger, and a controller, the method comprising:
receiving, using the controller, a power limit value;
determining, using the controller, a supportable charge current of the internal power source;
determining, using the controller, a power-limited current based on the power limit value and a core charger output voltage;
determining, using the controller, a target charge current by comparing the power-limited current and the supportable charge current; and
charging, using the core charger, the internal power source at the target charge current.

11. The method of claim 10, further comprising:
determining, using a sensor, sensor data associated with the internal power source, wherein the supportable charge current is determined based on the sensor data.

12. The method of any of claims 10 or 11, wherein the target charge current is determined as the lower value between the power-limited current and the supportable charge current.

13. The method of any of claims 10-12, wherein the power limit value is received from an external device via a network communications module.

14. The method of any of claims 10-13, further comprising,
receiving, using the controller, a command from an external device via a network communications module;
enabling/disabling, using the controller, an adjustable charge rate feature of the portable power supply based on the command;
charging, using the core charger, the internal power source at the target charge current when the adjustable charge rate feature is enabled; and
charging, using the core charger, the internal power source at the supportable charge current when the adjustable charge rate feature is disabled.

15. The method of claim 14, further comprising,
providing, via a user interface, an indication of an enabled/disabled status of the adjustable charge rate feature.
